# EUROPÄISCHE PATENTSCHRIFT

(11) **EP 3 696 033 B1**
(45) Veröffentlichungstag und Bekanntmachung des Hinweises auf die Patenterteilung: **12.04.2023**
(21) Anmeldenummer: 19217644.4
(22) Anmeldetag: 18.12.2019
(51) Int. Cl.: B60T 1/14, F16D 63/00, B60T 1/00

(54) **BREMSVORRICHTUNG**
BRAKING DEVICE
DISPOSITIF DE FREINAGE

(30) Priorität: 18.02.2019 AT 501182019
(43) Veröffentlichungstag der Anmeldung: 19.08.2020
(73) Patentinhaber: Tesch, Erich, 8605 Kapfenberg (AT)
(72) Erfinder: Tesch, Erich, 8605 Kapfenberg (AT)
(74) Vertreter: Wirnsberger & Lerchbaum Patentanwälte OG

(56) Entgegenhaltungen:
- WO-A1-94/03350
- DE-A1- 19 936 022
- DE-A1-102012 021 019
- GB-A- 250 458
- US-A- 1 334 644
- US-A- 3 113 641
- US-A- 4 613 015

## Beschreibung

Die Erfindung betrifft eine Bremsvorrichtung für ein Fahrzeug, aufweisend ein bewegbar mit einem Gehäuse verbundenes Bremselement, welches mittels einer Bewegung in eine erste Bewegungsrichtung aus einer Transportposition in eine Bremsposition bringbar ist, in welcher ein Untergrund durch das Bremselement kontaktierbar ist, wenn die Bremsvorrichtung an einem Fahrzeug angeordnet ist.

Des Weiteren betrifft die Erfindung ein Verfahren zum Abbremsen eines Fahrzeuges, insbesondere eines Traktors, im Gelände, mit einer Bremsvorrichtung, mit einem bewegbar mit einem Gehäuse verbundenen Bremselement, welches mittels einer Bewegung in eine erste Bewegungsrichtung aus einer Transportposition in eine Bremsposition gebracht wird, in welcher das Bremselement in einen Untergrund eingreift. Gemäß dem Stand der Technik sind verschiedene Bremsvorrichtungen bekannt. Im Dokument DE 10 2006 013 967 A1 wird ein zusätzliches Notbremssystem für Automobile beschrieben. Dabei wird ein Andruckblech durch ein Hebel-/Hydrauliksystem bei Auslösung über ein Steuerrad oder einen Fußhebel direkt gegen eine Fahrbahn gedrückt. In Transportposition sind das Andruckblech sowie ein erforderlicher Hebel bzw. Zylinder unterhalb eines Fahrzeugbodens wegklappbar angeordnet. Grundsätzlich soll dieses Notbremssystem als Zusatzbremse im Ernstfall verwendet werden, beispielsweise bei Blitz- oder Glatteis, um eine Fahrtgeschwindigkeit des Fahrzeuges zu reduzieren, und zwar ergänzend zu einer primären Fahrzeugbremse. Die Verwendung einer solchen Notbremsvorrichtung wirkt sich besonders während eines Einsatzes im steilen Gelände nachteilig aus, da eine Bremswirkung nur durch Reibung und bloß in eine Fortbewegungsrichtung des Fahrzeuges, in diesem Fall in Fahrtrichtung, generierbar. Das Dokument DE 199 36 022A1 beschreibt eine Bremsanordnung gemäß dem Oberbegriff von Anspruch 1.

Im Dokument CN 1923582 A wird eine selbstnachstellende Notbremsvorrichtung für Kraftfahrzeuge beschrieben, wobei eine Bremswirkung durch eine Bremsplatte herbeigeführt wird, welche flächig in direkten Kontakt mit dem Untergrund gebracht wird. Die entstehende Reibung zwischen Bremsplatte und Boden bewirkt somit eine die Fahrtgeschwindigkeit reduzierende Bremswirkung. Diese Notbremsvorrichtung wirkt ebenfalls ergänzend zu einer primären Fahrzeugbremse. Auch in diesem Fall ist die Wirkung der Notbremse durch den Reibungswiderstand der Bremsplatte gegeben und begrenzt auf eine Wirkrichtung. Dies wirkt sich wiederum nachteilig für den Einsatz im Gelände aus. Insbesondere ist eine Fixierung eines Fahrzeuges in einer bestimmten Position nicht möglich. So kommt es bei Fahrzeugen, die in steilem Gelände eingesetzt werden, insbesondere Traktoren auf Steilhängen, immer wieder zu Unfällen, welche dadurch zustande kommen, dass ein Fahrer im steilen Gelände eine Kontrolle über das Fahrzeug verliert, das Fahrzeug unkontrolliert beschleunigt und in weiterer Folge abstürzt. Hier versagen die Bremsvorrichtungen des Standes der Technik.

Aufgabe der Erfindung ist es, eine Bremsvorrichtung der eingangs genannten Art anzugeben, welche die Nachteile des Standes der Technik behebt und die Bremsvorrichtung beispielsweise einsetzbar an Fahrzeugen im steilen Gelände macht. Gleichzeitig sollen eine einfache und kostengünstige Herstellbarkeit und Montierbarkeit am Fahrzeug erreicht werden.

Des Weiteren soll ein Verfahren zum Abbremsen eines Fahrzeuges unter Verwendung einer Bremsvorrichtung angegeben werden.

Die erste Aufgabe wird erfindungsgemäß dadurch gelöst, dass bei einer Bremsvorrichtung der eingangs erwähnten Art zumindest ein zweites Bremselement vorgesehen ist, welches bewegbar mit dem Gehäuse verbunden und mittels einer Bewegung in einer von der ersten Bewegungsrichtung verschiedenen zweiten Bewegungsrichtung aus einer Transportposition in eine Bremsposition bewegbar ist.

Ein mit der Erfindung erzielter Vorteil ist insbesondere darin zu sehen, dass bei Anordnung von zumindest zwei Bremselementen, welche in unterschiedliche Bewegungsrichtungen aus der Transportposition in die Bremsposition bewegbar sind, eine Bremswirkung in unterschiedliche Fortbewegungsrichtungen des Fahrzeuges erreichbar ist. Dadurch ist die erfindungsgemäße Bremsvorrichtung im Gelände effizient einsetzbar, zumal durch eine Bewegung des Fahrzeuges und einem Kontakt mit dem Untergrund maximal ein Bremselement entgegen der Bewegungsrichtung wieder in Richtung der Transportposition zurückgedrückt werden kann, sodass eine effektive Bremswirkung zumindest durch eines der beiden Bremselemente gegeben ist. Ein weiterer Vorteil ist eine einfache Bauweise, welche eine kostengünstige Herstellbarkeit und auch eine simple Montage an einem Fahrzeug ermöglicht.

Die Bremsvorrichtung und deren Bauteile können in verschiedenen Größen ausgebildet sein, um an unterschiedliche Fahrzeuge angepasst zu werden.

Zweckmäßigerweise ist mit dem ersten Bremselement und/oder dem zweiten Bremselement eine Feder verbunden, welche bei der Bewegung des Bremselements von der Transportposition in die Bremsposition entspannt wird. Dadurch wird die Bewegung der Bremselemente aus der Transportposition in die Bremsposition beschleunigt und mit einer deutlich höheren Kraft durchgeführt, als dies bei einer Verwendung ohne Feder der Fall wäre. Auf diese Weise kann die Bremswirkung effizient innerhalb eines kurzen Zeitraumes erzielt werden. Weiter wird dadurch eine um die Federkraft erhöhte Kraft erreicht, mit welcher die Bremselemente in den Untergrund eindringen können, um das Fahrzeug zügig abzubremsen.

Üblicherweise sind die Bremselemente derart ausgebildet, dass diese bei einer Bewegung des Fahrzeuges in den Untergrund, insbesondere eine Wiese oder einen Waldboden, eindringen können. Es ist dann eine Bremsvorrichtung gegeben, bei welcher die Bremswirkung nicht nur über Reibung, sondern über einen Formschluss zwischen den Bremselementen und dem Untergrund gegeben ist. Die Bremsvorrichtung ist dann auch insbesondere im steilen Gelände effektiv, in welchem Bremsvorrichtungen, welche nur über die Reibung wirken, versagen würden.

Es ist von Vorteil, dass zumindest ein Bremselement zumindest teilweise plattenförmig ausgebildet ist. Dies ermöglicht die kostengünstige und einfache Bauweise der Bremselemente und wirkt sich zusätzlich platzsparend bei Montage unterhalb des Fahrzeuges aus. Darüber hinaus wird mit plattenförmigen Bremselementen eine besonders effektive Bremswirkung erreicht, zumal bei einem Eindringen von plattenförmigen Bremselementen in den Untergrund eine große Kontaktfläche der Bremsvorrichtung mit dem Untergrund gegeben ist, um das Fahrzeug über den Formschluss mit dem Untergrund zu bremsen.

Es hat sich bewährt, dass zumindest ein Bremselement mit einer endseitig spitz zulaufenden Kontur und/oder zwei Stegen ausgebildet ist, wobei zumindest ein Steg eine Breite von maximal 50 %, vorzugsweise maximal 30 %, insbesondere maximal 10 % einer Gesamtbreite des Bremselements aufweist. Auf diese Weise kann sich das Bremselement mit Hilfe der Stege im Untergrund verkeilen und nachfolgend mittels der spitz zulaufenden Kontur fixieren. Somit kann das Fahrzeug im Gelände rasch gebremst werden. Zweckmäßigerweise ist ein Haltemechanismus zur Fixierung der Bremselemente in der Transportposition vorgesehen. Dadurch können die Bremselemente, wenn diese nicht benötigt werden, in einer Transportposition fixiert werden, beispielsweise während einer normalen Fahrt des Fahrzeuges. Üblicherweise sind die Bremselemente derart angeordnet, dass diese von der Transportposition in die Bremsposition bewegbar sind, indem der Haltemechanismus gelöst wird. Die Bremselemente können dann beispielsweise mit einer Schwerkraft und/oder der Federkraft von der Transportposition in die Bremsposition bewegt werden. Günstig ist es daher für eine rasche Aktivierbarkeit der Vorrichtung, wenn der Haltemechanismus die Bremselemente gegen eine Kraft, insbesondere gegen die Schwerkraft und/oder gegen die Federkraft, in der Transportposition hält, sodass die Bremselemente bei einem Lösen des Haltemechanismus durch die Kraft in die Bremsposition bewegt werden. Der Haltemechanismus, und somit die Bremsvorrichtung, kann beispielsweise durch einen manuell betätigbaren Schalter in einer Fahrerkabine des Fahrzeuges, an welchem die Bremsvorrichtung angeordnet ist, betätigt bzw. aktiviert werden. Alternativ ist auch eine automatische Betätigung über Sensoren möglich, mit welchen unzulässige Fahrzustände des Fahrzeuges bzw. unzulässig hohe Geschwindigkeiten und/oder Beschleunigungen erkannt werden.

Als praktikabel hat es sich herausgestellt, wenn der Haltemechanismus einen Bolzen zur Fixierung der Bremselemente in der Transportposition und eine Kraftübersetzung aufweist, sodass der Haltemechanismus mit geringer Kraft, vorzugsweise mittels eines Elektromagneten, aktivierbar und wieder lösbar ist. Dadurch können die Bremselemente auf einfache und rasche Weise aus der Fixierung in der Transportposition gelöst werden, um in die Bremsposition gebracht zu werden.

Es ist von Vorteil, dass das erste Bremselement mittels einer Bewegung um eine erste Drehachse von der Transportposition in die Bremsposition bringbar ist und das zweite Bremselement mittels einer Bewegung um eine zweite Drehachse von der Transportposition in die Bremsposition bringbar ist. Dadurch sind die Bremselemente klappbar an einer Unterseite des Fahrzeuges montierbar, wobei in der Transportposition nur ein geringer Platzbedarf gegeben ist.

Es hat sich bewährt, dass die erste Drehachse und die zweite Drehachse etwa parallel sind und das erste Bremselement und das zweite Bremselement mit gegenläufiger Drehbewegung von der Transportposition in die Bremsposition bringbar sind. Dadurch wird die Bremswirkung der Bremselemente in jeweils entgegengesetzte Richtung hervorgerufen, um eine zuverlässige Bremswirkung unabhängig von der Bewegung des Fahrzeuges zu erreichen.

Um eine besonders zuverlässige Bremswirkung zu erreichen, ist es günstig, wenn zumindest an einem Bremselement, vorzugsweise an beiden Bremselementen, ein Anschlag vorgesehen ist, welcher die Bewegung des Bremselements auf einen Bewegungswinkel von maximal 140°, vorzugsweise maximal 120°, insbesondere maximal 90° begrenzt, ausgehend von einer gedachten Ebene, in der zumindest eine Drehachse des ersten Bremselements und zumindest ein Punkt der Drehachse des zweiten Bremselements liegen. Es ist dann in Verbindung mit den unterschiedlichen Bewegungsrichtungen, mittels welcher die Bremselemente von der Transportposition in die Bremsposition bewegt werden, sichergestellt, dass die Bremswirkung durch das Eindringen zumindest eines Bremselements in den Untergrund gegeben ist, und zwar unabhängig davon, in welche Richtung sich das abzubremsende Fahrzeug bewegt. So kann durch die Bewegung maximal eines der beiden Bremselemente entgegen der Bewegungsrichtung gedrückt werden, sodass das Eindringen dieses Bremselements in den Untergrund verhindert ist. Das zweite Bremselement wird jedoch durch die Bewegung, bei Kontakt mit dem Untergrund, weiter in Bewegungsrichtung gedrückt, bis dieses am Anschlag anliegt, sodass dieses Bremselement in den Untergrund eindringen kann, um das Fahrzeug zu bremsen.

Günstig ist es, wenn bei einem Fahrzeug mit einer Bremsvorrichtung die Bremsvorrichtung erfindungsgemäß ausgebildet ist. Dadurch ist ein zuverlässiges Bremsen des Fahrzeuges möglich, insbesondere kann durch das mit einer erfindungsgemäßen Bremsvorrichtung ausgestattete Fahrzeug eine zuverlässige Notbremsfunktion gewährleistet werden. Die erfindungsgemäße Bremsvorrichtung kann bei Fahrzeugen aller Art, angetriebenen und nichtangetriebenen, insbesondere bei Anhängern, eingesetzt werden. Besonders können die Vorteile der erfindungsgemäßen Bremsvorrichtung beim Fahrzeug genutzt werden, welches im steilen Gelände eingesetzt wird, insbesondere bei einem Traktor oder dergleichen.

Es hat sich bewährt, dass die Bremselemente um Drehachsen drehbar sind, wobei die Drehachsen etwa in einem rechten Winkel auf eine Längsachse des Fahrzeuges, welche etwa in Fahrtrichtung weist, ausgerichtet sind. Dadurch ist das Fahrzeug zuverlässig abbremsbar und fixierbar.

Die zweite Aufgabe wird dadurch gelöst, dass bei einem Verfahren der eingangs genannten Art zumindest ein zweites, bewegbar mit dem Gehäuse verbundenes Bremselement mittels einer Bewegung in einer von der ersten Bewegungsrichtung verschiedenen zweiten Bewegungsrichtung aus einer Transportposition in eine Bremsposition gebracht wird. Dadurch ist das Fahrzeug in unterschiedliche Fortbewegungsrichtungen fixierbar und bremsbar. Somit kann beispielsweise das Fahrzeug gebremst und wieder unter Kontrolle gebracht werden, welches im steilen Gelände abgerutscht ist und mit einer normalen Fahrzeugbremse nicht mehr bremsbar wäre.

Weitere Merkmale, Vorteile und Wirkungen der Erfindung ergeben sich anhand der nachfolgend dargestellten Ausführungsbeispiele. In den Zeichnungen, auf welche dabei Bezug genommen wird, zeigen:
Fig. 1 eine erfindungsgemäße Bremsvorrichtung in einer Seitenansicht montiert an einem Fahrzeug;
Fig. 2a die erfindungsgemäße Bremsvorrichtung in einer Transportposition;
Fig. 2b die erfindungsgemäße Bremsvorrichtung in einer Bremsposition;
Fig. 3 eine Draufsicht auf die erfindungsgemäße Bremsvorrichtung;
Fig. 4 eine perspektivische Draufsicht auf die erfindungsgemäße Bremsvorrichtung.

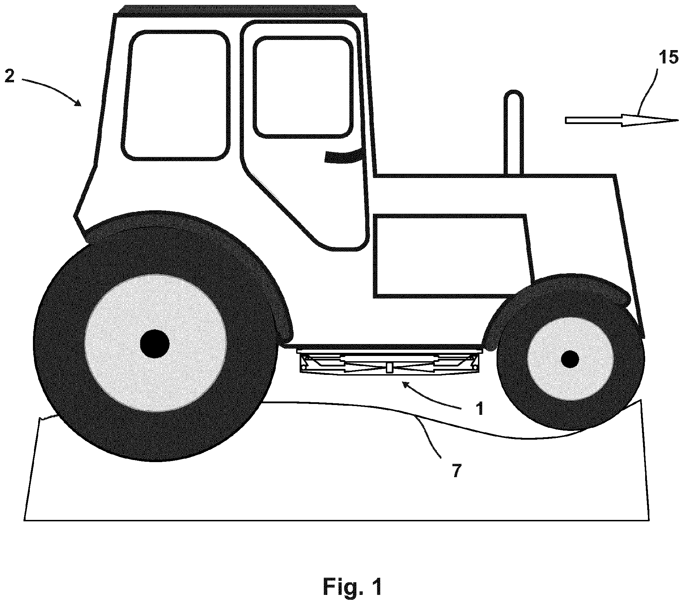

Fig. 1 zeigt eine Seitenansicht eines Fahrzeuges 2 mit einer erfindungsgemäßen Bremsvorrichtung 1, welche an einer Unterseite des Fahrzeuges 2 montiert ist, wobei sich das Fahrzeug 2 in Fahrtrichtung 15 über einen unebenen Untergrund 7 fortbewegt.

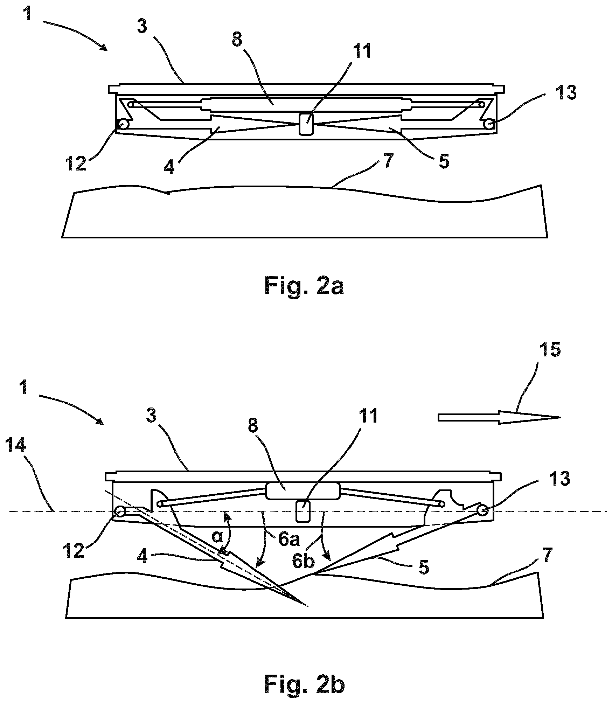

Fig. 2a zeigt die erfindungsgemäße Bremsvorrichtung 1 in einer Transportposition. Wie ersichtlich weist die Bremsvorrichtung 1 ein Gehäuse 3 zur Montage am Fahrzeug 2, bewegbar mit dem Gehäuse verbundene Bremselemente 4, 5, einen Haltemechanismus 11 zur Fixierung der Bremselemente 4, 5 in der Transportposition und eine Feder 8 auf, welche gespannt ist, wenn sich die Bremselemente 4, 5 in der Transportposition befinden und bei einer Bewegung der Bremselemente 4, 5 von der Transportposition in eine Bremsposition entspannt wird. Die Bremselemente 4, 5 sind um parallele Drehachsen 12, 13 drehbar mit dem Gehäuse 3 verbunden, wobei das erste Bremselement 4 um eine erste Drehachse 12 drehbar ist und das zweite Bremselement 5 um eine zweite Drehachse 13. Das erste Bremselement 4 ist gegenläufig zum zweiten Bremselement 5 aus der Transportposition in die Bremsposition drehbar, in welcher das Bremselement 4 den Untergrund 7 kontaktiert bzw. in diesen eindringt, um das Fahrzeug 2 zu bremsen. Dadurch ist sichergestellt, dass maximal ein Bremselement bei einer Bewegung des Fahrzeuges 2 durch den Untergrund 7 entgegen der Bewegungsrichtung zurück in Richtung der Transportposition bewegt wird und zumindest ein Bremselement für eine Bremswirkung verfügbar ist.

In Fig. 2a ist das Fahrzeug 2, an welchem die Bremsvorrichtung 1 angeordnet ist, nicht mehr dargestellt. Wie ersichtlich befindet sich die Bremsvorrichtung 1 in einem gewissen Abstand zum Untergrund 7, wobei dieser Abstand durch eine Unterbodenhöhe des Fahrzeuges 2 definiert ist.

Fig. 2b zeigt die erfindungsgemäße Bremsvorrichtung 1 nach einer Aktivierung derselben, wobei sich die Bremselemente 4, 5 in der Bremsposition befinden. Dabei wird der Untergrund 7 durch die Bremselemente 4, 5 kontaktiert. Das erste Bremselement 4 ist bereits teilweise in den Untergrund 7 eingedrungen, um durch einen Formschluss mit dem Untergrund 7 eine starke Bremswirkung zu erreichen. Bei der Bewegung des Fahrzeuges 2, an welchem die Bremsvorrichtung 1 angeordnet ist, in Fahrtrichtung 15 wird das erste Bremselement 4 wie ersichtlich durch den Untergrund 7 von der Transportposition weg in Richtung der Bremsposition, und somit weiter in den Untergrund 7, und das zweite Bremselement 5 entgegen der Bewegungsrichtung in die Transportposition zurückgedrückt. Dadurch wird ein Eindringen des ersten Bremselements 4 in den Untergrund 7 erreicht, selbst wenn das zweite Bremselement 5 nicht in den Untergrund 7 eindringt und nur eine eingeschränkte Bremswirkung entfalten kann. Dadurch kann ein außer Kontrolle geratenes Fahrzeug 2 auch im steilen Gelände zuverlässig wieder unter Kontrolle gebracht werden. Überdies zeigt Fig. 2b einen Bewegungswinkel α, welcher die Bewegung des ersten Bremselements 4, ausgehend von einer gedachten Ebene 14 bis zum ausgelenkten Bremselement 4, wobei in der Ebene 14 zumindest eine erste Drehachse 12 des ersten Bremselements 4 und zumindest ein Punkt einer zweiten Drehachse 13 des zweiten Bremselements 5 liegen, beschreibt. Die Bewegung der Bremselemente 4, 5 ist bis zu einem in Fig. 2b nicht dargestellten Anschlag möglich, wobei ein maximaler Bewegungswinkel dann etwa 110° beträgt.

Weiter ist ersichtlich, dass in der in Fig. 2b dargestellten Position der Bremselemente 4, 5 die Feder 8 gegenüber der in Fig. 2a dargestellten Position entspannt ist. Die Feder 8 verstärkt somit die Bremswirkung bzw. bewirkt eine rasche Bewegung der Bremselemente 4, 5 von der jeweiligen Transportposition in die jeweilige Bremsposition und unterstützt das Eindringen der Bremselemente 4, 5 in den Untergrund 7.

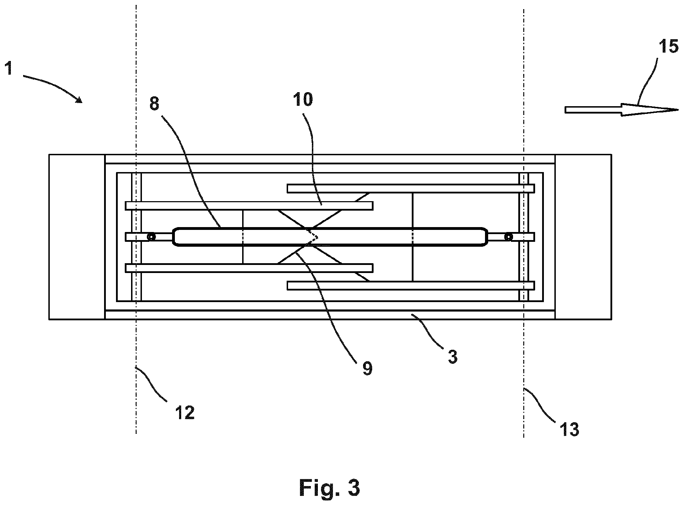

Fig. 3 zeigt eine Draufsicht der erfindungsgemäßen Bremsvorrichtung 1. Beide Bremselemente 4, 5 sind bei dem hier dargestellten Ausführungsbeispiel mit einer endseitig spitz zulaufenden Kontur 9 und zwei Stegen 10 ausgebildet, wobei jeder Steg 10 wie dargestellt eine Breite von 10 % einer Gesamtbreite eines einzelnen Bremselements aufweisen kann. Dadurch ist ein zuverlässiges Eindringen des Bremselements in den Untergrund 7 gewährleistet. Ferner ist das Gehäuse 3 der erfindungsgemäßen Bremsvorrichtung 1 ersichtlich. Darüber hinaus zeigt Fig. 3 ein mögliches Ausführungsbeispiel der Feder 8, welche die Bremselemente 4, 5 verbindet. Das erste Bremselement 4 ist mittels einer Bewegung um die erste Drehachse 12 von der Transportposition in die Bremsposition bringbar und das zweite Bremselement 5 mittels einer Drehung um die zweite Drehachse 13 von der Transportposition in die Bremsposition bringbar, wobei die erste Drehachse 12 und die zweite Drehachse 13 etwa parallel sind und die Drehachsen 12, 13 etwa in einem rechten Winkel auf eine Längsachse des Fahrzeuges 2, welche etwa in Fahrtrichtung 15 weist, ausgerichtet sind. Die Bremselemente 4, 5 sind somit mit gegenläufigen Bewegungen aus der Transportposition in die Bremsposition bringbar.

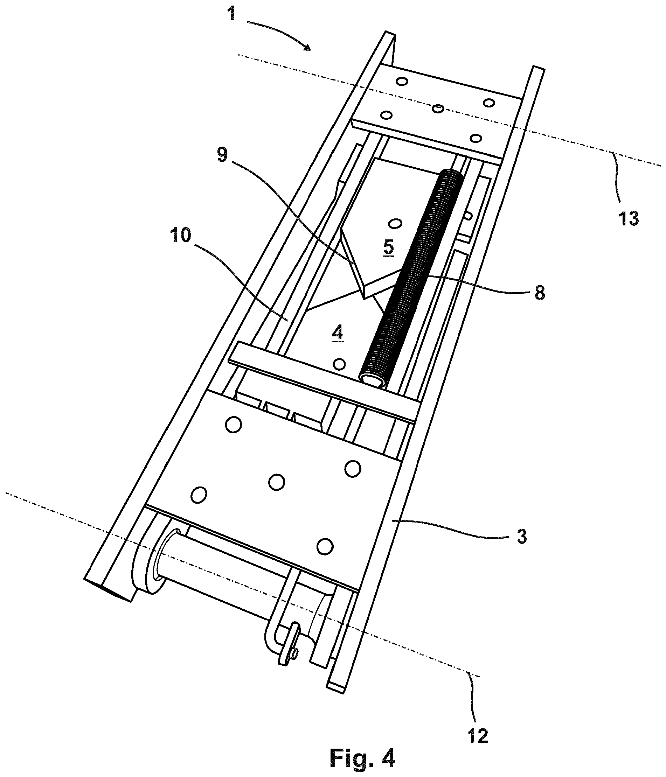

Fig. 4 zeigt eine perspektivische Draufsicht auf die erfindungsgemäße Bremsvorrichtung 1 mit dem Gehäuse 3, wobei ein weiteres Ausführungsbeispiel der Feder 8 gezeigt wird, und eine perspektivische Ansicht des Ausführungsbeispiels der Bremselemente 4, 5, wobei jedes Bremselement die endseitig spitz zulaufende Kontur 9 und zwei Stege 10 aufweist.

Die Bremselemente 4, 5 werden in der in Fig. 4 dargestellten Transportposition mit dem nicht dargestellten Haltemechanismus gehalten, welcher einen Bolzen aufweist, mit welchem das erste Bremselement 4 und mit diesem auch das zweite Bremselement 5 in der Transportposition gehalten werden. Durch ein Betätigen des Haltemechanismus, beispielsweise mit einem Elektromagneten, kann der Bolzen bewegt werden, sodass dieser die Bremselemente 4, 5 nicht mehr in der Transportposition hält. Die Bremselemente 4, 5 werden dann durch eine Schwerkraft in Verbindung mit einer Federkraft um die Drehachsen 12, 13 beschleunigt und in die Bremsposition bewegt, in welcher die Bremselemente 4, 5 in den Untergrund 7 eingreifen können, um das Fahrzeug 2 zu bremsen.

Mit einer erfindungsgemäßen Bremseinrichtung können außer Kontrolle geratene Fahrzeuge auch im steilen Gelände einfach und zuverlässig abgebremst und somit schwere Unfälle vermieden werden. Die Bremsvorrichtung kann beispielsweise von einer Fahrerkabine aus mit einem Notschalter oder dergleichen aktiviert werden.

## Patentansprüche

1. Bremsvorrichtung (1) für ein Fahrzeug (2), aufweisend ein bewegbar mit einem Gehäuse (3) verbundenes Bremselement (4), welches mittels einer Bewegung in eine erste Bewegungsrichtung (6a) aus einer Transportposition in eine Bremsposition bringbar ist, in welcher ein Untergrund (7) durch das Bremselement (4) kontaktierbar ist, wenn die Bremsvorrichtung (1) an einem Fahrzeug (2) angeordnet ist, wobei zumindest ein zweites Bremselement (5) vorgesehen ist, welches bewegbar mit dem Gehäuse (3) verbunden und mittels einer Bewegung in einer von der ersten Bewegungsrichtung (6a) verschiedenen zweiten Bewegungsrichtung (6b) aus einer Transportposition in eine Bremsposition bewegbar ist, **dadurch gekennzeichnet, dass** ein Haltemechanismus (11) zur Fixierung der Bremselemente (4, 5) in der Transportposition vorgesehen ist, wobei der Haltemechanismus (11) einen Bolzen zur Fixierung der Bremselemente (4, 5) in der Transportposition und eine Kraftübersetzung aufweist, sodass der Haltemechanismus (11) mit geringer Kraft, vorzugsweise mittels eines Elektromagneten, aktivierbar und wieder lösbar ist.

2. Bremsvorrichtung (1) nach Anspruch 1, **dadurch gekennzeichnet, dass** mit dem ersten Bremselement (4) und/oder dem zweiten Bremselement (5) eine Feder (8) verbunden ist, welche bei Bewegung des ersten Bremselements (4) und/oder zweiten Bremselements (5) von der Transportposition in die Bremsposition entspannt wird.

3. Bremsvorrichtung (1) nach Anspruch 1 oder 2, **dadurch gekennzeichnet, dass** zumindest ein Bremselement zumindest teilweise plattenförmig ausgebildet ist.

4. Bremsvorrichtung (1) nach Anspruch 3, **dadurch gekennzeichnet, dass** zumindest ein Bremselement mit einer endseitig spitz zulaufenden Kontur (9) und/oder zwei Stegen (10) ausgebildet ist, wobei zumindest ein Steg (10) eine Breite von maximal 50 %, vorzugsweise maximal 30 %, insbesondere maximal 10 % einer Gesamtbreite des Bremselements aufweist.

5. Bremsvorrichtung (1) nach einem der Ansprüche 1 bis 4, **dadurch gekennzeichnet, dass** das erste Bremselement (4) mittels einer Bewegung um eine erste Drehachse (12) von der Transportposition in die Bremsposition und das zweite Bremselement (5) mittels einer Bewegung um eine zweite Drehachse (13) von der Transportposition in die Bremsposition bringbar ist.

6. Bremsvorrichtung (1) nach Anspruch 5, **dadurch gekennzeichnet, dass** die erste Drehachse (12) und die zweite Drehachse (13) etwa parallel sind und das erste Bremselement (4) und das zweite Bremselement (5) mittels gegenläufiger Drehbewegungen von der Transportposition in die Bremsposition bringbar sind.

7. Bremsvorrichtung (1) nach einem der Ansprüche 1 bis 6, **dadurch gekennzeichnet, dass** an zumindest einem Bremselement, vorzugsweise an beiden Bremselementen (4, 5), ein Anschlag vorgesehen ist, welcher die Bewegung des Bremselements auf einen Bewegungswinkel (α) von maximal 140°, vorzugsweise maximal 120°, insbesondere maximal 90° begrenzt, ausgehend von einer gedachten Ebene (14), in der zumindest eine Drehachse des ersten Bremselements (4) und zumindest ein Punkt einer Drehachse des zweiten Bremselements (5) liegen.

8. Fahrzeug (2) mit einer Bremsvorrichtung (1), **dadurch gekennzeichnet, dass** die Bremsvorrichtung (1) nach einem der Ansprüche 1 bis 7 ausgebildet ist.

9. Fahrzeug (2) nach Anspruch 8, **dadurch gekennzeichnet, dass** die Bremselemente (4, 5) um Drehachsen (12, 13) drehbar sind, wobei die Drehachsen (12, 13) etwa in einem rechten Winkel auf eine Längsachse des Fahrzeuges (2), welche etwa in Fahrtrichtung (15) weist, ausgerichtet sind.

10. Verfahren zum Abbremsen eines Fahrzeuges (2), insbesondere eines Traktors, im Gelände mit einer Bremsvorrichtung (1), insbesondere einer Bremsvorrichtung (1) nach einem der Ansprüche 1 bis 7, mit einem bewegbar mit einem Gehäuse (3) verbundenen Bremselement (4), welches mittels einer Bewegung in eine erste Bewegungsrichtung (6a) aus einer Transportposition in eine Bremsposition gebracht wird, in welcher das Bremselement (4) in einen Untergrund (7) eingreift, wobei zumindest ein zweites, bewegbar mit dem Gehäuse (3) verbundenes Bremselement (5) mittels einer Bewegung in einer von der ersten Bewegungsrichtung (6a) verschiedenen zweiten Bewegungsrichtung (6b) aus einer Transportposition in eine Bremsposition gebracht wird, **dadurch gekennzeichnet, dass** die Bremselemente (4, 5) in der Transportposition mit einem Haltemechanismus (11) gehalten werden, wobei der Haltemechanismus (11) einen Bolzen aufweist, mit welchem das erste Bremselement (4) und mit diesem auch das zweite Bremselement (5) in der Transportposition gehalten werden, wobei der Haltemechanismus (11), beispielsweise mit einem Elektromagneten, betätigt wird, wobei der Bolzen bewegt wird, sodass dieser die Bremselemente (4, 5) nicht mehr in der Transportposition hält.

## Claims

1. A braking device (1) for a vehicle (2), having a braking element (4) which is movably connected to a housing (3), which braking element is able to be brought from a transport position into a braking position by means of a movement in a first movement direction (6a), in which braking position a substrate (7) is able to be contacted by the braking element (4), when the braking device (1) is arranged on a vehicle (2), wherein at least a second braking element (5) is provided, which is movably connected to the housing (3) and, by means of a movement in a second movement direction (6b) different from the first movement direction (6a), is able to be moved from a transport position into a braking position, **characterized in that** a holding mechanism (11) is provided for fixing the braking elements (4, 5) in the transport position, wherein the holding mechanism (11) has a pin for fixing the braking elements (4, 5) in the transport position, and a force transmission, so that the holding mechanism (11) is able to be activated and able to be released again with minimal force, preferably by means of an electromagnet.

2. The braking device (1) according to Claim 1, **characterized in that** a spring (8) is connected to the first braking element (4) and/or to the second braking element (5), which spring is relaxed on movement of the first braking element (4) and/or second braking element (5) from the transport position into the braking position.

3. The braking device (1) according to Claim 1 or 2, **characterized in that** at least one braking element is formed at least partially in a plate-shaped manner.

4. The braking device (1) according to Claim 3, **characterized in that** at least one braking element is formed with a tapering contour (9) on the end side and/or with two webs (10), wherein at least one web (10) has a width of a maximum of 50 %, preferably a maximum of 30 %, in particular a maximum of 10 % of an overall width of the braking element.

5. The braking device (1) according to one of Claims 1 to 4, **characterized in that** the first braking element (4) is able to be brought by means of a movement about a first rotation axis (12) from the transport position into the braking position, and the second braking element (5) is able to be brought by means of a movement about a second rotation axis (13) from the transport position into the braking position.

6. The braking device (1) according to Claim 5, **characterized in that** the first rotation axis (12) and the second rotation axis (13) are approximately parallel, and the first braking element (4) and the second braking element (5) are able to be brought from the transport position into the braking position by means of contrary rotary movements.

7. The braking device (1) according to one of Claims 1 to 6, **characterized in that** a stop is provided on at least one braking element, preferably on both braking elements (4, 5), which stop delimits the movement of the braking element to a movement angle (α) of a maximum of 140°, preferably a maximum of 120°, in particular a maximum of 90°, proceeding from an imaginary plane (14), in which a least one rotation axis of the first braking element (4) and at least one point of a rotation axis of the second braking element (5) lie.

8. A vehicle (2) with a braking device (1), **characterized in that** the braking device (1) is formed according to one of Claims 1 to 7.

9. The vehicle (2) according to Claim 8, **characterized in that** the braking elements (4, 5) are rotatable about rotation axes (12, 13), wherein the rotation axes (12, 13) are aligned approximately at a right angle to a longitudinal axis of the vehicle (2), which points approximately in the direction of travel (15).

10. A method for braking a vehicle (2), in particular a tractor, in terrain, with a braking device (1), in particular a braking device (1) according to one of Claims 1 to 7, with a braking element (4) movably connected to a housing (3), which is brought from a transport position into a braking position by means of a movement in a first movement direction (6a), in which braking position the braking element (4) engages into a substrate (7), wherein at least a second braking element (5), movably connected to the housing (3), is brought from a transport position into a braking position by means of a movement in a second movement direction (6b) different from the first movement direction (6a), **characterized in that** the braking elements (4, 5) are held in the transport position by a holding mechanism (11), wherein the holding mechanism (11) has a pin by which the first braking element (4), and with the latter also the second braking element (5), are held in the transport position, wherein the holding mechanism (11) is actuated, for example by an electromagnet, wherein the pin is moved so that the latter no longer holds the braking elements (4, 5) in the transport position.

## Revendications

1. Dispositif de freinage (1) pour véhicule (2), présentant un élément de freinage (4) relié de manière mobile à un boîtier (3), qui peut être amené au moyen d'un mouvement dans une première direction de mouvement (6a) d'une position de transport à une position de freinage, dans lequel une base (7) peut être contactée par l'élément de freinage (4) lorsque le dispositif de freinage (1) est disposé sur un véhicule (2), dans lequel au moins un deuxième élément de freinage (5) est prévu, qui est relié de manière mobile au boîtier (3) et au moyen d'un mouvement dans une deuxième direction de mouvement (6b) différente d'une première direction de mouvement (6a) peut être déplacé d'une position de transport à une position de freinage, **caractérisé en ce qu'**un mécanisme de maintien (11) pour fixer les éléments de freinage (4, 5) est prévu dans la position de transport, dans lequel le mécanisme de maintien (11) présente un boulon pour la fixation des éléments de freinage (4, 5) dans la position de transport et une translation de puissance, de sorte que le mécanisme de maintien (11) puisse être activé et débloqué à nouveau avec peu de force, de préférence au moyen d'un électro-aimant.

2. Dispositif de freinage (1) selon la revendication 1, **caractérisé en ce qu'**un ressort (8) est relié au premier élément de freinage (4) et/ou au deuxième élément de freinage (5), qui se détend lors du déplacement du premier élément de freinage (4) et/ou du deuxième élément de freinage (5) de la position de transport à la position de freinage.

3. Dispositif de freinage (1) selon la revendication 1 ou 2, **caractérisé en ce qu'**au moins un élément de freinage est au moins partiellement configuré en forme de plaque.

4. Dispositif de freinage (1) selon la revendication 3, **caractérisé en ce qu'**au moins un élément de freinage est configuré avec un contour (9) se rétrécissant en pointe à l'extrémité et/ou deux gradins (10), dans lequel au moins un gradin (10) a une largeur maximale de 50 %, de préférence un maximum de 30 %, en particulier un maximum de 10 % d'une largeur totale des éléments de freinage.

5. Dispositif de freinage (1) selon une des revendications 1 à 4, **caractérisé en ce que** le premier élément de freinage (4) au moyen d'un mouvement autour d'un premier axe de rotation (12) peut être amené de la position de transport à la position de freinage et le deuxième élément de freinage (5) au moyen d'un mouvement autour d'un deuxième axe de rotation (13) peut être amené de la position de transport à la position de freinage.

6. Dispositif de freinage (1) selon la revendication 5, **caractérisé en ce que** le premier axe de rotation (12) et le deuxième axe de rotation (13) sont approximativement parallèles et le premier élément de freinage (4) et le deuxième élément de freinage (5) au moyen de mouvements de rotation opposés peuvent être amenés de la position de transport à la position de freinage.

7. Dispositif de freinage (1) selon une quelconque des revendications 1 à 6, **caractérisé en ce que** sur au moins un élément de freinage, de préférence sur les deux éléments de freinage (4, 5), une butée est prévue qui limite le déplacement de l'élément de freinage à un angle de déplacement (α) d'au maximum 140°, de préférence d'au maximum 120°, en particulier d'au maximum 90°, à partir d'un plan fictif (14), dans lequel se situent au moins un axe de rotation du premier élément de freinage (4) et au moins un point d'un axe de rotation du deuxième élément de freinage (5).

8. Véhicule (2) comportant un dispositif de freinage (1), **caractérisé en ce que** le dispositif de freinage (1) est configuré selon une des revendications 1 à 7.

9. Véhicule (2) selon la revendication 8, **caractérisé en ce que** les éléments de freinage (4, 5) peuvent être entraînés en rotation autour d'axes de rotation (12, 13), dans lequel les axes de rotation (12, 13) sont alignés approximativement à angle droit avec un axe longitudinal du véhicule (2), qui pointe approximativement dans la direction de conduite (15).

10. Procédé de freinage d'un véhicule (2), notamment un tracteur, hors route avec un dispositif de freinage (1), notamment un dispositif de freinage (1) selon une des revendications 1 à 7, comportant un élément de freinage (4) relié de manière mobile à un boîtier (3), qui est amené d'une position de transport à une position de freinage au moyen d'un mouvement dans une première direction de mouvement (6a), dans lequel l'élément de freinage (4) s'engage dans une base (7), dans lequel au moins un deuxième élément de freinage (5) relié de manière mobile au boîtier (3) au moyen d'un mouvement dans une deuxième direction de mouvement (6b) différente de la première direction de mouvement (6a) est amené d'une position de transport à une position de freinage, **caractérisé en ce que** les éléments de freinage (4, 5) dans la position de transport sont maintenus avec un mécanisme de maintien (11), dans lequel le mécanisme de maintien (11) présente un boulon avec lequel le premier élément de freinage (4) et avec celui-ci également le deuxième élément de freinage (5) sont maintenus dans la position de transport, dans lequel le mécanisme de maintien (11) est actionné, par exemple avec un électro-aimant, est actionné, dans lequel le boulon est déplacé de telle sorte que les éléments de freinage (4, 5) ne soient plus maintenus dans la position de transport.
